# EUROPEAN PATENT SPECIFICATION

(11) **EP 4 250 437 B1**
(45) Date of publication and mention of the grant of the patent: **26.08.2026**
(21) Application number: 22804847.6
(22) Date of filing: 18.04.2022
(51) Int. Cl.: H01M 10/6554, H01M 10/647, H01M 10/613, H01M 10/625, H01M 10/627, H01M 10/6556, H01M 50/204, H01M 50/20, H01M 50/211, H01M 50/249, H01M 50/105

(54) **VEHICLE WITH A BATTERY PACK COMPRISING A BATTERY MODULE**
FAHRZEUG MIT BATTERIEPACK UMFASSEND EIN BATTERIEMODUL
VÉHICULE AVEC BLOC-BATTERIE COMPRENANT UN MODULE DE BATTERIE

(30) Priority: 20.05.2021 KR 20210065126
(43) Date of publication of application: 27.09.2023
(60) Divisional application: 26162453.0 / 4 749 777
(73) Proprietor: LG Energy Solution, Ltd., Seoul 07335 (KR)
(72) Inventor: SHIN, Eun-Gyu, Daejeon 34122 (KR)
(74) Representative: Goddar, Heinz J.
(86) International application number: PCT/KR2022/005522
(87) International publication number: WO 2022/244992

(56) References cited:
- EP-B1- 2 729 977
- CN-A- 107 093 781
- JP-A- 2019 129 149
- KR-A- 20170 057 465
- KR-A- 20200 055 215
- KR-A- 20200 098 839
- US-A1- 2019 229 384
- US-A1- 2020 006 825
- US-A1- 2020 152 931

## Description

### TECHNICAL FIELD

The present invention relates to a vehicle comprising a battery pack comprising a battery module.

### BACKGROUND ART

US 2019/229384 A1 discloses a cooling system for cooling battery cells includes a plate assembly defining a chamber. The chamber is configured to receive a fluid therein. A plurality of apertures extend through the plate assembly. Each of the plurality of apertures is configured to align with a cell vent of one of the battery cells.

US 2020/152931 A1 relates to a battery module.

US 2020/006825 A1 relates to an arrangement for cooling a battery module used in a hybrid vehicle or an electric vehicle.

EP 2 729 977 B1 relates generally to a cooling method and system, and more particularly, to a battery cooling method and system.

Due to their characteristics of being easily applicable to various products and electrical properties such as high energy density, secondary batteries are not only commonly applied to portable devices, but universally applied to electric vehicles (EVs) or hybrid electric vehicles (HEVs) that are driven by an electrical driving source. Such secondary batteries are gaining attention for their primary advantage of remarkably reducing the use of fossil fuels and not generating by-products from the use of energy, making it a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. This unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

When fabricating the battery pack by connecting the plurality of battery cells in series and/or in parallel, it is general to make a battery module including at least one battery cell, and then fabricate a battery pack and/or a battery rack using at least one battery module with an addition of any other component.

In the battery module and/or the battery pack and/or the battery rack including the plurality of battery cells, when heat or its resulting fire occurs due to a fault or failure in any battery cell, the generated heat and/or the fire may spread to the adjacent battery cell, causing incidents or accidents, for example, larger fires and/or explosions. Accordingly, it is important to not only improve the cooling performance of the battery cells but also ensure safety when a dangerous situation occurs due to overheat. That is, when a fire occurs due to overheat of any of the plurality of battery cells, it is important to stop the transfer of flames or heat to the surrounding battery cells more quickly and effectively.

Therefore, there is a need for an approach to provide a vehicle comprising a battery pack comprising a battery module with improved cooling performance and safety.

### DISCLOSURE

The present invention is defined by the features of the independent claim. Embodiments are given in the dependent claims.

### Technical Problem

The present disclosure is designed to solve the above-described problem, and therefore the present disclosure is directed to providing a battery module having a structure for effectively suppressing fires when high temperature gas or spark is generated in the battery module due to abnormal heat generation and a battery pack, a vehicle and an energy storage system comprising the same.

The present disclosure is further directed to providing a battery module with improved cooling performance, and a battery pack, a vehicle and an energy storage system comprising the same.

The technical problem of the present disclosure to be solved is not limited to the above-described problems, and these and other problems will be clearly understood by those skilled in the art from the following detailed description.

### Technical Solution

To achieve the above-described objective, a battery module according to an aspect of the present disclosure includes a battery cell assembly including a plurality of battery cells; a module housing having an internal space in which the at least one battery cell assembly is received; and a cooling unit disposed on a side of the battery cell assembly, wherein the cooling unit includes a first cooling plate and a second cooling plate spaced apart from the first cooling plate to form a coolant channel, the second cooling plate being positioned closer to the battery cell assembly than the first cooling plate, and at least part of the second cooling plate has a patterned portion.

Here, the module housing may include a side cover and a bottom cover, and the cooling unit may cover a top of the battery cell assembly.

Additionally, the patterned portion may be on at least one of two surfaces of the second cooling plate.

The patterned portion includes at least one groove having a reduced thickness of the second cooling plate.

In this instance, the first cooling plate may include at least one recess which is concave in a direction facing the second cooling plate.

In this instance, the recess may contact the second cooling plate.

Here, the recess may be extended along a lengthwise direction or a widthwise direction of the battery module.

Additionally, the first cooling plate may include a plurality of the recesses, and the plurality of the recesses may be spaced apart from each other.

In this instance, the battery cell may be a pouch-type cell including a pair of electrode leads.

In this instance, the battery cell may be positioned upright on the bottom cover with the pair of electrode leads extended along a direction facing the side cover.

In this instance, the second cooling plate may be made of aluminum.

In addition, the present disclosure provides a battery pack including at least one battery module according to the above-described embodiments.

Furthermore, the present disclosure provides a vehicle including at least one battery pack according to the above-described embodiment.

Moreover, the present disclosure provides an energy storage system including at least one battery pack according to the above-described embodiment.

### Advantageous Effects

According to the present disclosure, it is possible to effectively prevent fires in a battery module.

In particular, according to the present disclosure, it is possible to prevent high temperature gas and/or spark from growing into a fire in the event of abnormal heat generation from any battery cell included in a battery module.

Accordingly, according to the present disclosure, it is possible to provide a battery module which is safe when an abnormal situation occurs due to overheat of a battery cell, and a battery pack, a vehicle and an energy storage system comprising the same.

In addition, according to the present disclosure, it is possible to provide a battery module with improved cooling performance and a battery pack, a vehicle and an energy storage system comprising the same.

Besides, the present disclosure may have many other effects, and these and other effects will be described in each embodiment, or a description of effects that can be easily inferred by those skilled in the art will be omitted.

### DESCRIPTION OF DRAWINGS

The accompanying drawings illustrate the exemplary embodiment of the present disclosure and together with the following detailed description, serve to provide further understanding of the technical features of the present disclosure, and thus, the present disclosure should not be construed as being limited to the drawings.
FIG. 1 is an exploded perspective view of a battery module according to an embodiment of the present disclosure.
FIG. 2 is a perspective view of a battery module according to an embodiment of the present disclosure.
FIG. 3 is a diagram showing an exemplary shape of a battery cell applied to a battery module according to an embodiment of the present disclosure.
FIG. 4 is a cross-sectional view of FIG. 2 taken along the line A-A'.
FIG. 5 is a diagram illustrating a groove according to another embodiment of the present disclosure.
FIG. 6 is a diagram illustrating a groove according to still another embodiment of the present disclosure.
FIGS. 7 and 8 are diagrams illustrating that a coolant is fed into an accommodation space of a battery cell assembly upon venting in any battery cell.
FIG. 9 is a diagram illustrating a battery pack according to an embodiment of the present disclosure.
FIG. 10 is a diagram illustrating a vehicle according to an embodiment of the present disclosure.

### BEST MODE

Hereinafter, the exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and illustrations shown in the drawings are an exemplary embodiment of the present disclosure, but not intended to fully describe the technical aspects of the present disclosure, so it should be understood that a variety of other equivalents and modifications could have been made thereto at the time that the application was filed.

Additionally, to help an understanding of the present disclosure, the accompanying drawings show some components in exaggerated scale, not in actual scale.

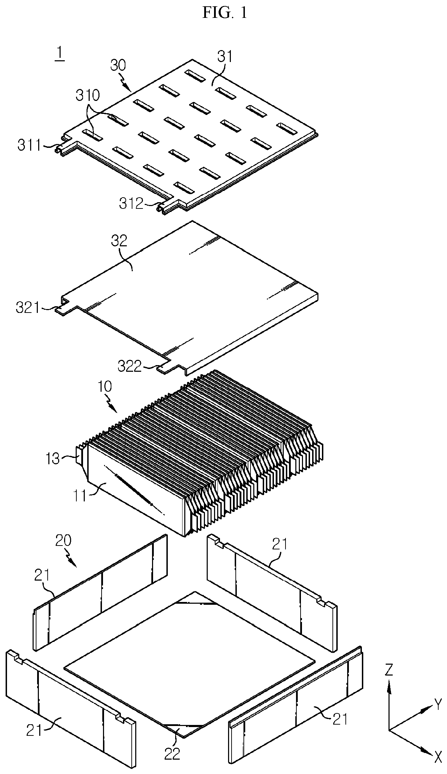

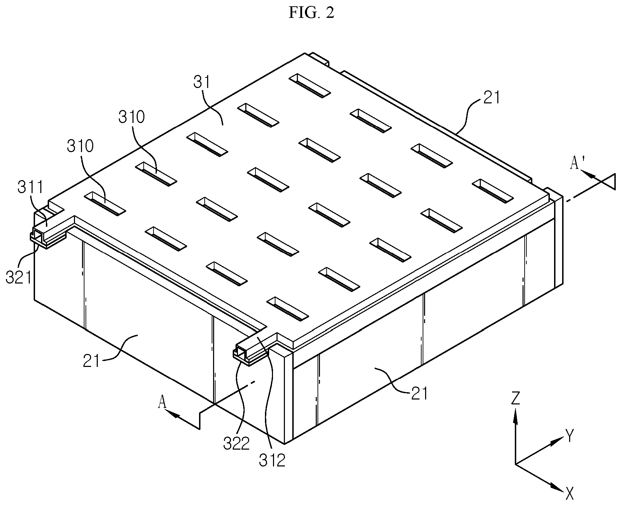

FIG. 1 is an exploded perspective view of a battery module according to an embodiment of the present disclosure, and FIG. 2 is a perspective view of the battery module according to an embodiment of the present disclosure.

Referring to FIGS. 1 and 2, the battery module 1 according to the present disclosure includes at least one battery cell assembly 10, a module housing 20 and a cooling unit 30.

The battery cell assembly 10 includes a plurality of battery cells 11. The plurality of battery cells 11 may be secondary batteries. The battery cell 11 includes an electrode assembly and a battery case accommodating the electrode assembly.

As shown in FIG. 1, the battery cell 11 provided in the battery cell assembly 10 may be, for example, a pouch-type battery cell 11. However, the battery cell 11 is not limited to a particular type, and any other type of battery cell such as a cylindrical cell or a prismatic cell may be used in the battery cell assembly 10 of the present disclosure.

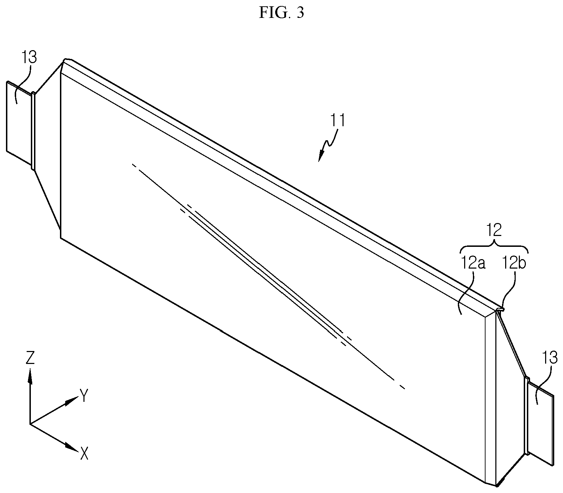

The following description is made based on the battery cell 11 which is a pouch-type battery cell as shown in FIG. 3. FIG. 3 is a diagram showing an exemplary shape of the battery cell applied to the battery module according to an embodiment of the present disclosure.

The battery cell 11 includes an electrode assembly (not shown), a pouch case 12 accommodating the electrode assembly and a pair of electrode leads 13 connected to the electrode assembly and extended outward from the pouch case 12.

The pouch case 12 includes an accommodation part 12a accommodating the electrode assembly and a sealing part 12b on the periphery of the accommodation part 12a. The pair of electrode leads 13 are coupled to electrode tabs (not shown) of the electrode assembly and are extended outward from the pouch case 12 through the sealing part 12b. The pair of electrode leads 13 are extended along the lengthwise direction (parallel to the X axis) of the battery cell 11. The pair of electrode leads 13 may be extended in the same direction or in opposite directions. The battery cell 11 including the pair of electrode leads 13 extended in opposite directions is referred to as a bidirectional cell, and the battery cell 11 including the pair of electrode leads 13 extended in the same direction is referred to as a unidirectional cell.

Although the drawings show the bidirectional cell, this is provided by way of illustration only, and it is obvious that the unidirectional cell may be applied to the battery module 1 according to an embodiment of the present disclosure.

A plurality of battery cells 11 of the present disclosure may be stacked facing each other to form a cell stack. For example, as shown in FIG. 1, each battery cell 11 may be positioned upright on a bottom cover 22 as described below with the pair of electrode leads 13 extended along a direction (parallel to the X axis) toward a side cover 21 as described below. Additionally, the plurality of battery cells 11 may be stacked along the lengthwise direction (parallel to the Y axis) of the battery module 1.

By this arrangement structure of the battery cells 11, at least one of the two sides in the widthwise direction (Parallel to the Z axis) of the battery cell 11 is close to the cooling unit 30 as described below. In general, the pouch-type battery cell 11 is vented on its side in the event of abnormal heat generation and the subsequent internal pressure rise. That is, when the internal pressure rises in the battery cell 11, the sealing part 12b on the two sides in the widthwise direction (parallel to the Z axis) of the battery cell 11 ruptures earlier than the sealing part 12b in the direction (parallel to the X axis) in which the electrode leads 13 are extended.

Accordingly, when venting in the battery cell 11 occurs, the cooling unit 30 ruptures quickly to bring the coolant into direct contact with the battery cell assembly 10, thereby preventing fires or quickly extinguishing fires that occurred.

The detailed structure of the cooling unit 30 according to the present disclosure, configured to rupture quickly upon venting in the battery cell 11, will be described in detail below.

The battery cell assembly 10 may further include a busbar frame assembly (not shown) to electrically connect the plurality of battery cells 11.

The battery cell assembly 10 may include a pair of busbar frame assemblies. The busbar frame assembly includes a busbar frame and at least one busbar. The busbar frame is coupled to each of one side and the other side in the lengthwise direction of the cell stack formed by stacking the plurality of battery cells 11. For example, the busbar frame may be made of an electrical insulating material such as resin. The busbar frame may have holes and/or slits through which the electrode leads 13 are extended.

The busbar may be made of an electrically conductive material, for example, a metal such as copper or nickel. Additionally, the busbar is coupled to the adjacent electrode leads 13 extended through the busbar frame. Additionally, the busbar is fixed onto the busbar frame.

As shown in FIG. 1, the module housing 20 may include the side cover 21 and the bottom cover 22. The side cover 21 stands upright on the bottom cover 22 and covers the side of the battery module. Accordingly, the module housing 20 may have an empty internal space in which at least one battery cell assembly 10 is received.

The module housing 20 may have at least one open side. Additionally, the cooling unit 30 may be disposed at the open portion. For example, referring to FIGS. 1 and 2, the module housing 20 includes the side cover 21 and the bottom cover 22, and the cooling unit 30 is disposed to cover the top of the battery cell assembly 10.

Although not shown, in another embodiment of the present disclosure, the bottom cover 22 of the module housing 20 may be replaced with the cooling unit 30. **In** this case, the module housing 20 may include only the side cover 21, and the cooling unit 30 may be positioned in each of the two sides in the heightwise direction (parallel to the Z axis) of the battery cell assembly 10.

The cooling unit 30 includes a first cooling plate 31 and a second cooling plate 32 that is spaced apart from the first cooling plate 31 to form a coolant channel and is positioned closer to the battery cell assembly 10 than the first cooling plate 31.

The first cooling plate 31 and the second cooling plate 32 are spaced apart from each other to form the channel between them to allow the coolant to flow inside. The first cooling plate 31 and the second cooling plate 32 may be made of, for example, a metal such as aluminum. However, the material of the first cooling plate 31 and the second cooling plate 32 is not limited thereto, and the first cooling plate 31 and the second cooling plate 32 may be made of resin. The first cooling plate 31 and the second cooling plate 32 spaced apart from each other may be coupled to each other, for example, by brazing along the edges of each plate. However, any other coupling method may be used.

As described above, since the first cooling plate 31 and the second cooling plate 32 allow the coolant to pass between them, the battery module 1 of the present disclosure may indirectly cool the plurality of battery cells 11 included in the battery module 1. For example, referring to FIG. 1, since the cooling unit 30 is configured to cover the upper surface (parallel to the X-Y plane) of the battery cell assembly 10, it is possible to achieve indirect cooling of the plurality of battery cells 11 received in the module housing 20.

The first cooling plate 31 may include at least one recess 310 thereon. The first cooling plate 31 includes a first inlet 311 and a first outlet 312.

Referring to FIG. 1, the recess 310 may be concave in a direction facing the second cooling plate 32. Specifically, the recess 310 has a concave shape when viewed from the outer surface of the first cooling plate 31 and a convex shape when viewed from the inner surface of the first cooling plate 31. The recess 310 may contact the second cooling plate 32, and further, may be firmly coupled to the second cooling plate 32, for example, by welding.

The recess 310 may be extended along the lengthwise direction (parallel to the Y axis) or the widthwise direction (parallel to the X axis) of the battery module 1. Additionally, the first cooling plate 31 may have a plurality of recesses 310 thereon, and the plurality of recesses 310 may be arranged spaced apart from each other. For example, as shown in FIG. 1, the recesses 310 may be extended along the widthwise direction (parallel to the X axis) of the battery module 1, and may be arranged side by side in a line, spaced apart from each other. When viewed from the inside of the cooling unit 30, i.e., between the first cooling plate 31 and the second cooling plate 32, the recesses 310 extended in the widthwise direction (parallel to the X axis) of the battery module 1 act as partitions to partially divide the coolant channel. Accordingly, the recesses 310 may guide the smooth movement of the coolant throughout the cooling unit 30. Accordingly, it is possible to increase the cooling efficiency of the battery module 1.

Although not shown, the recesses 310 may be extended along the lengthwise direction (parallel to the Y axis) of the battery module 1. Alternatively, the recesses 310 may be extended along a direction in which a predetermined angle is formed with the X axis and the Y axis.

The first inlet 311 acts as a passage through which the coolant is fed into the cooling unit 30. The first outlet 312 acts as a passage through which the coolant exits the cooling unit 30. The first inlet 311 and the first outlet 312 may be at part of the periphery of the first cooling plate 31. The first inlet 311 and the first outlet 312 may be in the same direction as shown in FIG. 1. Alternatively, although not shown, the first inlet 311 and the first outlet 312 may be formed on either side.

The second cooling plate 32 includes a patterned portion 320. The second cooling plate 32 includes a second inlet 321 and a second outlet 322.

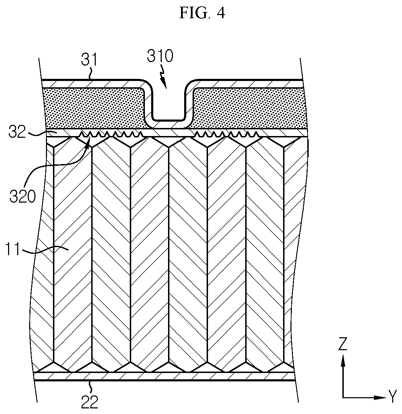

The patterned portion 320 includes at least one groove G having the reduced thickness of the second cooling plate 32. The patterned portion 320 may be formed on at least one of two surfaces of the second cooling plate 32. It will be described in more detail with reference to FIG. 4.

FIG. 4 is a cross-sectional view of FIG. 2 showing the battery module according to an embodiment of the present disclosure, taken along the line A-A'.

Referring to FIG. 4, the patterned portion 320 is at part of a surface that faces the battery cell 11 among the two surfaces of the second cooling plate 32. The patterned portion 320 may include at least one groove G having the reduced thickness of the second cooling plate 32. For example, the patterned portion 320 shown in FIG. 4 includes six grooves G. When the patterned portion 320 includes the plurality of grooves G, the plurality of grooves G is arranged spaced apart from each other along the lengthwise direction (parallel to the Y axis) of the battery module 1. When the patterned portion 320 is on the surface that faces the battery cell 11 among the two surfaces of the second cooling plate 32, the second cooling plate 32 may rupture quickly by the contact with high temperature gas and/or spark ejected due to the venting in the battery cell 11.

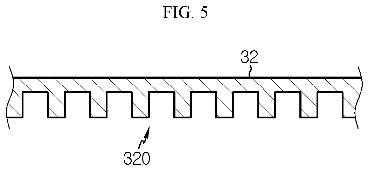

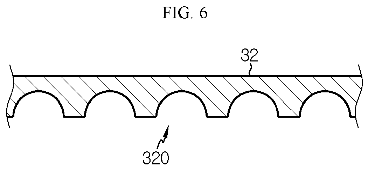

Referring to FIGS. 4 to 6, the groove G may have an approximately triangular shape (see FIG. 4), an approximately rectangular shape (see FIG. 5) and an approximately semi-circular shape (see FIG. 6) in cross section. However, the shape of the groove G is not necessarily limited thereto, and may include any shape that partially reduces the thickness of the second cooling plate 32.

Although not shown in the drawings of the present disclosure, as opposed to FIGS. 4 to 6, the patterned portion 320 according to another embodiment of the present disclosure may be on a surface that faces the first cooling plate 31 among the two surfaces of the second cooling plate 32, or may be on both the two surfaces.

The groove or grooves G may be extended along the lengthwise direction (parallel to the X axis) of the battery cell 11. For example, referring to FIG. 1, each battery cell 11 is positioned upright in the lengthwise direction or the X axis direction, and the groove or grooves G is/are extended along the X axis direction. Accordingly, when the patterned portion 320 ruptures, the coolant is supplied along the extension direction of the sealing part 12b on one or two sides in the widthwise direction (parallel to the Z axis) of the battery cell 11, thereby effectively preventing fires or quickly extinguishing fires that occurred. Taking the function of the patterned portion 320 into account, the plurality of grooves G and the sealing part 12b of each of the plurality of battery cells 11 may be arranged in one-to-one correspondence.

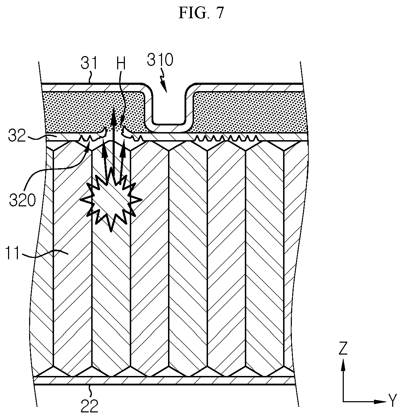

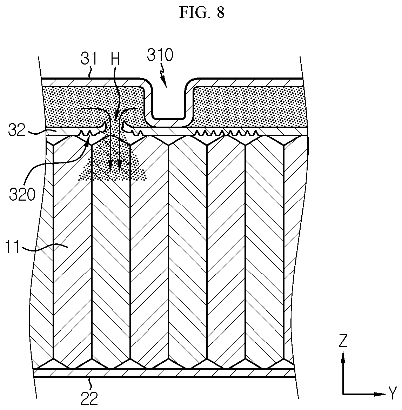

The cooling mechanism of the present disclosure for ensuring safety in the event of venting in the battery cell 11 due to a fault or failure in the battery cell 11 and the subsequent high temperature gas and/or spark will be described in more detail with reference to FIGS. 7 and 8.

FIG. 7 is a diagram illustrating gas and/or spark ejected due to venting in any battery cell 11 in FIG. 4, and FIG. 8 is a diagram illustrating that the coolant is fed into the battery cell assembly 10 through an opening H.

Describing with reference to FIG. 7, in the event of abnormal heat generation from the specific battery cell 11 among the plurality of battery cells 11, high temperature gas and/or spark may be ejected. The spark includes high temperature metal particles and/or high temperature electrode active material flakes ejected due to venting in the battery cell 11. Referring to FIG. 7, the second cooling plate 32 has the patterned portion 320 on the surface that faces the battery cell 11 among the two surfaces, and the patterned portion 320 includes the plurality of grooves G extended along the lengthwise direction (parallel to the X axis) of the battery cell 11. In at least part of the area having the grooves G, the thickness of the second cooling plate 32 may be minimum. The high temperature gas and/or spark ejected due to venting in the battery cell 11 may come into contact with the grooves G, and in this instance, the opening H is formed by the partial melting and/or rupture of the second cooling plate 32 at the location at which the thickness of the second cooling plate 32 is minimum in the area having the grooves G.

Accordingly, as can be seen in FIG. 8, the coolant flowing between the first cooling plate 31 and the second cooling plate 32 may enter the battery module 1 through the opening H. Accordingly, the coolant may cool the battery cell 11 quickly by the direct contact with the battery cell 11, and minimize the heat transfer to the neighboring battery cell 11, thereby preventing thermal runaway and the subsequent large-scale fires.

The second inlet 321 acts as a passage through which the coolant is fed into the cooling unit 30. The second outlet 322 acts as a passage through which the coolant exits the cooling unit 30. The second inlet 321 and the second outlet 322 may be at part of the periphery of the second cooling plate 32. The second inlet 321 and the second outlet 322 may be in the same direction as shown in FIG. 1. Alternatively, although not shown, the second inlet 321 and the second outlet 322 may be on either side. However, when the second inlet 321 is at the location corresponding to the first inlet 311 and the second outlet 322 is at the location corresponding to the first outlet 312, they may act as passages through which the coolant enters and exits. This is because the first inlet 311 and the second inlet 321 are coupled to form a coolant inlet, and the first outlet 312 and the second outlet 322 are coupled to form a coolant outlet.

Although the drawings of the present disclosure show that the first inlet 311 of the first cooling plate 31 and the second inlet 321 of the second cooling plate 32 are coupled to each other to form the coolant inlet, and likewise, the first outlet 312 of the first cooling plate 31 and the second outlet 322 of the second cooling plate 32 are coupled to form the coolant outlet, the present disclosure is not limited thereto. That is, the coolant inlet and the coolant outlet may have any structure that allows the coolant to enter and exit. For example, a structure having an opening or a pipe in at least part of the cooling unit 30 may be contemplated.

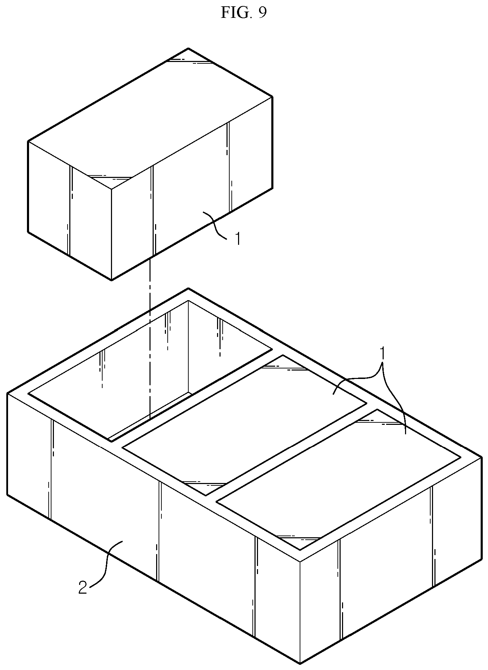

FIG. 9 is a diagram illustrating a battery pack 2 according to an embodiment of the present disclosure.

Referring to FIG. 9, the battery pack 2 according to the present disclosure may include a plurality of battery modules 1 according to the present disclosure. In addition to the battery modules 1, the battery pack 2 according to the present disclosure may further include a variety of other components, for example, the components of the battery pack 2 known at the time of filing the patent application such as a battery management system (BMS), a pack case, a relay and a current sensor.

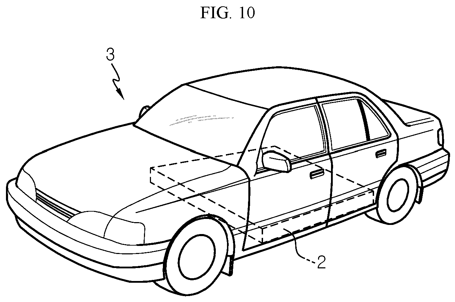

FIG. 10 is a diagram illustrating a vehicle 3 according to an embodiment of the present disclosure.

Referring to FIG. 10, the vehicle 3 according to the present disclosure may include at least one battery module 1 according to the present disclosure. In particular, for high energy capacity, the vehicle 3 may include a plurality of battery modules 1 according to the present disclosure, electrically connected to each other. Alternatively, a plurality of battery modules 1 according to the present disclosure may form a battery pack 2, and the vehicle 3 may include at least one battery pack 2.

Although not shown in the drawing, an energy storage system may include at least one battery module 1 according to the present disclosure. In particular, to have, the energy storage system may include a plurality of battery modules 1 according to the present disclosure, electrically connected to each other. Alternatively, a plurality of battery modules 1 according to the present disclosure may form one battery pack 2, and the energy storage system may include a plurality of battery packs 2.

The terms indicating directions as used herein such as upper and lower are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that various modifications and changes may be made thereto within the technical aspects of the present disclosure and the appended claims and equivalents thereof.

## Claims

1. A vehicle (3) comprising a battery pack (2) comprising a battery module (1), comprising:
a battery cell assembly (10) including a plurality of battery cells (11);
wherein the battery cells (11) provided in the battery cell assembly (10) are pouch-type battery cells (11) each including a pair of electrode leads (13) extended along a lengthwise direction, parallel to an X axis, of the respective battery cell (11), corresponding to a widthwise direction of the battery module (1),
a cooling unit (30), which is configured to rupture upon venting of one of the battery cells (11) to bring coolant into direct contact with the battery cell assembly (10), is disposed on a side of the battery cell assembly (10) in a widthwise direction of the battery cell, parallel to a Z axis, corresponding to a heightwise direction of the battery module (1); and
a module housing (20) having an internal space in which the at least one battery cell assembly (10) is received, wherein the plurality of battery cells (11) are stacked along a lengthwise direction, parallel to a Y axis, of the battery module (1), and arranged upright in the lengthwise direction which is parallel to the X axis of the respective battery cell (11), such that one of the two sides in a widthwise direction, parallel to the Z axis, of the battery cells (11) is close to the cooling unit (30);
wherein the module housing (20) includes a side cover (21) and a bottom cover (22), and
wherein the cooling unit (30) covers a top of the battery cell assembly (10), and
wherein the cooling unit (30) includes a first cooling plate (31) and a second cooling plate (32) spaced apart from the first cooling plate (31) to form a coolant channel, the second cooling plate (32) being positioned closer to the battery cell assembly (10) than the first cooling plate (31), and
wherein at least part of the second cooling plate (32) has a patterned portion (320),
wherein the patterned portion (320) includes at least one groove (G) having a shape that partially reduces the thickness of the second cooling plate (32),
wherein the at least one groove (G) is extended along the lengthwise direction of a respective battery cell (11) parallel to the X axis.

2. The vehicle (3)) according to claim 1, wherein the patterned portion (320) is on at least one of two surfaces of the second cooling plate (32) facing the battery cells (11).

3. The vehicle (3)according to claim 1, wherein the thickness of the second cooling plate (32) is minimum in at least part of the area having the at least one groove (G).

4. The vehicle (3) according to claim 1, wherein the patterned portion (320) includes a plurality of grooves (G) spaced apart from each other along the lengthwise direction, parallel to the Y axis, of the battery module (1).

5. The vehicle (3) according to claim 1, wherein the first cooling plate (31) includes at least one recess (310) which is concave in a direction facing the second cooling plate (32).

6. The vehicle (3) according to claim 5, wherein the recess (310) contacts the second cooling plate (32).

7. The vehicle (3)according to claim 5, wherein the recess (310) is extended along a lengthwise direction or a widthwise direction of the battery module (1).

8. The vehicle (3) according to claim 7, wherein the first cooling plate (31) includes a plurality of the recesses (310), and
wherein the plurality of the recesses (310) is spaced apart from each other.

9. The vehicle (3) according to claim 1, wherein the second cooling plate (32) is made of aluminum.

10. The vehicle (3) according to claim 1, wherein the battery pack (2) is arranged below the vehicle cabin.

## Patentansprüche

1. Fahrzeug (3) mit einem Batteriepack (2), das eine Batterie-Modul (1) umfasst, mit:
eine Batteriezellenbaugruppe (10) mit einer Vielzahl von Batteriezellen (11);
wobei die in der Batteriezellenanordnung (10) vorgesehenen Batteriezellen (11) Pouch-Batteriezellen (11) sind, die jeweils ein Paar Elektrodenanschlüsse (13) umfassen, die sich entlang einer Längsrichtung der jeweiligen Batteriezelle (11) - parallel zu einer X-Achse - erstrecken, entsprechend einer Breitenrichtung des Batteriemoduls (1),
eine Kühleinheit (30), die so ausgelegt ist, dass sie bei einer Entlüftung einer der Batteriezellen (11) aufbricht, um Kühlmittel in direkten Kontakt mit der Batteriezellenanordnung (10) zu bringen, und die an einer Seite der Batteriezellenanordnung (10) angeordnet ist, in einer Breitenrichtung der Batteriezelle, parallel zu einer Z-Achse, die der Höhenrichtung des Batteriemoduls (1) entspricht; und
ein Modulgehäuse (20) mit einem Innenraum, in dem die mindestens eine Batteriezellenbaugruppe (10) aufgenommen ist, wobei die mehreren Batteriezellen (11) entlang einer Längsrichtung des Batteriemoduls (1), parallel zu einer Y-Achse, gestapelt sind, und in Längsrichtung, die parallel zur X-Achse der jeweiligen Batteriezelle (11) verläuft, aufrecht angeordnet sind, sodass eine der beiden Seiten in Breitenrichtung, parallel zur Z-Achse, der Batteriezellen (11) nahe an der Kühleinheit (30) liegt;
wobei das Modulgehäuse (20) eine Seitenabdeckung (21) und eine Bodenabdeckung (22) umfasst, und
wobei die Kühleinheit (30) eine Oberseite der Batteriezellenanordnung (10) abdeckt, und
wobei die Kühleinheit (30) eine erste Kühlplatte (31) und eine zweite Kühlplatte (32) umfasst, die von der ersten Kühlplatte (31) beabstandet ist, um einen Kühlmittelkanal zu bilden, wobei die zweite Kühlplatte (32) näher an der Batteriezellenanordnung (10) positioniert ist als die erste Kühlplatte (31), und
wobei zumindest ein Teil der zweiten Kühlplatte (32) einen strukturierten Abschnitt (320) aufweist,
wobei der strukturierte Abschnitt (320) mindestens eine Nut (G) umfasst, deren Form die Dicke der zweiten Kühlplatte (32) teilweise verringert,
wobei die mindestens eine Nut (G) sich entlang der Längsrichtung einer jeweiligen Batteriezelle (11) parallel zur X-Achse erstreckt.

2. Das Fahrzeug (3) nach Anspruch 1, wobei sich der strukturierte Abschnitt (320) auf mindestens einer von zwei Oberflächen der zweiten Kühlplatte (32) befindet, die den Batteriezellen (11) zugewandt sind.

3. Das Fahrzeug (3) nach Anspruch 1, wobei die Dicke der zweiten Kühlplatte (32) in mindestens einem Teil des Bereichs, der die mindestens eine Nut (G) aufweist, minimal ist.

4. Das Fahrzeug (3) nach Anspruch 1, wobei der strukturierte Abschnitt (320) eine Vielzahl von Rillen (G) umfasst, die entlang der Längsrichtung des Batteriemoduls (1) - parallel zur Y-Achse - voneinander beabstandet sind.

5. Das Fahrzeug (3) nach Anspruch 1, wobei die erste Kühlplatte (31) mindestens eine Aussparung (310) aufweist, die in einer Richtung zur zweiten Kühl platte (32) hin konkav ist.

6. Das Fahrzeug (3) nach Anspruch 5, wobei die Aussparung (310) die zweite Kühlxml-ph-0000@deepl.internalplatte (32) berührt.

7. Das Fahrzeug (3) nach Anspruch 5, wobei sich die Aussparung (310) entlang einer Längsrichtung oder einer Breitenrichtung des Batteriemoduls (1) erstreckt.

8. Das Fahrzeug (3) nach Anspruch 7, wobei die erste Kühlplatte (31) mehrere der Aussparungen (310) aufweist, und
wobei die mehreren Aussparungen (310) voneinander beabstandet sind.

9. Das Fahrzeug (3) nach Anspruch 1, wobei die zweite Kühlplatte (32) aus Aluminium besteht.

10. Das Fahrzeug (3) nach Anspruch 1, wobei der Batteriepack (2) unterhalb der Fahrzeugkabine angeordnet ist.

## Revendications

1. Véhicule (3) comprenant un bloc-batterie (2) comprenant un module de batterie (1), comprenant :
un ensemble de cellules de batterie (10) comprenant une pluralité de cellules de batterie (11) ;
les cellules de batterie (11) agencées dans l'ensemble de cellules de batterie (10) étant des cellules de batterie (11) du type poche comprenant chacune une paire de conducteurs d'électrode (13) déployés dans le sens de la longueur, parallèlement à un axe X, de la cellule de batterie (11) respective, correspondant au sens de la largeur du module de batterie (1),
un dispositif de refroidissement (30), configuré pour se rompre lors de la ventilation d'une des cellules de batterie (11) afin d'amener un réfrigérant en contact direct avec l'ensemble de cellules de batterie (10), étant disposé sur un côté de l'ensemble de cellules de batterie (10) dans le sens de la largeur de la cellule de batterie, parallèlement à un axe Z, correspondant au sens de la hauteur du module de batterie (1) ; et
un boîtier de module (20) doté d'un espace interne dans lequel est logé l'au moins un ensemble de cellules de batterie (10), la pluralité de cellules de batterie (11) étant empilées dans le sens de la longueur, parallèlement à un axe Y, du module de batterie (1), et agencées droites dans le sens de la longueur qui est parallèle à l'axe X, de la cellule de batterie respective (11),
de sorte qu'un des deux côtés dans le sens de la largeur, parallèlement à l'axe Z, des cellules de batterie (11) soit proche du dispositif de refroidissement (30) ;
le boîtier de module (20) comprenant un couvercle latéral (21) et un couvercle inférieur (22), et
le dispositif de refroidissement (30) couvrant une partie supérieure de l'ensemble de cellules de batterie (10), et
le dispositif de refroidissement (30) comprenant une première plaque de refroidissement (31) et une deuxième plaque de refroidissement (32) espacée de la première plaque de refroidissement (31) en formant un conduit de réfrigérant, la deuxième plaque de refroidissement (32) étant positionnée plus près de l'ensemble de cellules de batterie (10) que la première plaque de refroidissement (31), et
au moins une partie de la deuxième plaque de refroidissement (32) possédant une partie à motif (320),
la partie à motif (320) comprenant au moins une rainure (G) dont la forme réduit partiellement l'épaisseur de la deuxième plaque de refroidissement (32),
l'au moins une rainure (G) s'étendant dans le sens de la longueur d'une cellule de batterie respective (11) parallèlement à l'axe X.

2. Véhicule (3) selon la revendication 1, la partie à motif (320) étant située sur au moins une de deux surfaces de la deuxième plaque de refroidissement (32) faisant face aux cellules de batterie (11).

3. Véhicule (3) selon la revendication 1, l'épaisseur de la deuxième plaque de refroidissement (32) étant minimale dans au moins une partie de la zone où se trouve l'au moins une rainure (G).

4. Véhicule (3) selon la revendication 1, la partie à motif (320) comprenant une pluralité de rainures (G) espacées l'une de l'autre dans le sens de la longueur, parallèlement à l'axe Y, du module de batterie (1).

5. Véhicule (3) selon la revendication 1, la première plaque de refroidissement (31) comprenant au moins un évidement (310) de forme concave dans une direction faisant face à la deuxième plaque de refroidissement (32).

6. Véhicule (3) selon la revendication 5, l'évidement (310) se trouvant au contact de la deuxième plaque de refroidissement (32).

7. Véhicule (3) selon la revendication 5, l'évidement (310) s'étendant dans le sens de la longueur ou dans le sens de la largeur du module de batterie (1).

8. Véhicule (3) selon la revendication 7, la première plaque de refroidissement (31) comprenant au moins une pluralité d'évidements (310), et
la pluralité d'évidements (310) étant espacés l'un de l'autre.

9. Véhicule (3) selon la revendication 1, la deuxième plaque de refroidissement (32) étant réalisée en aluminium.

10. Véhicule (3) selon la revendication 1, le bloc-batterie (2) étant agencé sous l'habitacle du véhicule.
